# EUROPÄISCHE PATENTSCHRIFT

(11) **EP 1 934 073 B1**
(45) Veröffentlichungstag und Bekanntmachung des Hinweises auf die Patenterteilung: **29.04.2009**
(21) Anmeldenummer: 06793582.5
(22) Anmeldetag: 18.09.2006
(51) Int. Cl.: B60R 19/48

(54) **VORRICHTUNG ZUR BEFESTIGUNG EINES SENSORS FÜR EIN FUßGÄNGERSCHUTZSYSTEM**
APPARATUS FOR ATTACHING A SENSOR FOR A PEDESTRIAN-PROTECTION SYSTEM
DISPOSITIF POUR FIXER UN CAPTEUR D'UN SYSTEME DE PROTECTION DES PIETONS

(30) Priorität: 30.09.2005 DE 102005047181
(43) Veröffentlichungstag der Anmeldung: 25.06.2008
(73) Patentinhaber: ROBERT BOSCH GMBH, 70442 Stuttgart (DE)
(72) Erfinder: DUKART, Anton, 70839 Gerlingen (DE); GROEGER, Ulrike, Farmington Hills 48331 (US); GRIEBEL, Martin, 72555 Metzingen (DE)
(86) Internationale Anmeldenummer: PCT/EP2006/066439
(87) Internationale Veröffentlichungsnummer: WO 2007/036448

(56) Entgegenhaltungen:
- DE-A1- 10 201 990
- DE-A1- 10 310 454
- DE-A1- 10 314 862
- DE-A1- 10 337 760
- DE-A1- 19 719 519
- DE-A1- 19 924 505
- US-A1- 2001 020 389
- US-A1- 2004 061 599

## Beschreibung

### Stand der Technik

Die Erfindung geht aus von einer Vorrichtung zur Befestigung eines Sensors für ein Fußgängerschutzsystem nach der Gattung des unabhängigen Patentanspruchs 1.

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeuge so konstruiert werden, dass die Verletzungen des Fußgängers bei einer Kollision innerhalb der in diesem EU-Gesetz geforderten Grenzen bleiben. Das bedeutet, dass die Fahrzeuge vorgeschriebene Tests mit Bein- und Kopfimpaktoren gegen den Stoßfänger bzw. gegen die Motorhaube bestehen müssen.

Eine erste Strategie zur Reduzierung von Verletzungen von Fußgängern zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und anschließend durch ein aktives Ansteuern einer Fußgängerschutzvorrichtung, wie beispielsweise von Außenairbags an den A-Säulen und/oder durch Anheben der Motorhaube, die benötigte Knautschzone zu schaffen. Bei der aktiven Lösung können verschiedene Sensorprinzipien benutzt werden, wie z.B. Beschleunigungssensoren, Drucksensoren, Klopfsensoren, piezoelektrische oder optische Sensoren usw.

In der DE 101 45 698 A1 wird ein Sensorsystem für ein Fahrzeug beschrieben, welches eine Vielzahl von Stoßfängersensoren umfasst, welche voneinander beabstandet in Breitenrichtung des Fahrzeugs an seinem vorderen Stoßfänger montiert sind. Zudem umfasst das beschriebene Sensorsystem ein Steuergerät zum Steuern des Betriebs von einem Fußgängerschutzsystem, welches die hinteren Enden einer Motorhaube in Abhängigkeit von Ausgangssignalen der Stoßfängersensoren anhebt.

Aus der gattengsgemässen DE 197 19 519 A1 ist es bekannt einen Ultraschallsensor am Stoßfänger mittels eines Halteteils, das rohrförmig ausgebildet ist, zu befestigen. Dabei kann eine Verschraubung zum Einsatz kommen. Aus DE 103 37 760 A1 ist es bekannt am Stoßfänger mittels einer Sensorhalterung einen Ultraschallsensor zu befestigen, wobei Aussparungen für Schrauben vorgesehen sind. Aus DE 10314 862 A1 ist ebenfalls ein Halter für eine Einparkhilfe bekannt, wo mit Rasteinrichtung eine Befestigung des Sensors im Halter erfolgt. Aus DE 199 24 505 A1 ist ein Ultraschallwandler bekannt, der über eine Halterung, die hohlzylindrisch ausgebildet ist, am Stoßfänger befestigt werden kann. Als Befestigungsmittel können Schnappelemente dienen. Aus DE 102 01 990 A1 ist ein Ultraschallsensor bekannt, der mit einem Gehäuse am Stoßfänger befestigt werden kann. US 2004/0061599 A1 offenbart einen Sensor und eine entsprechende Halterung dafür, wobei mittels einer Verrastung der Sensor in der Halterung eingesetzt werden kann. Aus US 2001/0020389 A1 ist ein Ultraschallsensor mit einer entsprechenden Halterung bekannt. Aus DE 10310 454 A1ist ein Sicherheitsrückfahrsensor bekannt, der mit einer zylindrischen Hülse an einem Stoßfänger befestigt wird.

### Vorteile der Erfindung

Die erfindungsgemäße Vorrichtung zur Befestigung eines Sensors für ein Fußgängerschutzsystem mit den Merkmalen des unabhängigen Patentanspruchs 1 hat demgegenüber die Vorteile. Es ist bekannt, dass der Sensor über eine Hilfsstruktur am Fahrzeug befestigt werden kann, welche dauerhaft mit einer Trägerstruktur des Fahrzeugs verbindbar ist und/oder an die Trägerstruktur angeformt ist. Durch die erfindungsgemäße Vorrichtung ist es in vorteilhafter Weise möglich, die Sensoren fest mit der Trägerstruktur zu verbinden, welche beispielsweise als Stoßfängerverkleidung ausgeführt ist, und die Befestigung über die gesamte Fahrzeuglebensdauer zu erhalten. Zudem ermöglicht die erfindungsgemäße Hilfsstruktur in vorteilhafter Weise, dass der Sensor die von einem Aufprall verursachten Signale über die steife bzw. versteifte Verbindung mit der Trägerstruktur sicher erfasst und zur Auswertung weiterleitet, um die Funktionalität des Fußgängerschutzsystems sicherzustellen. Außerdem verhindert die Hilfsstruktur in vorteilhafter Weise ein Lockern des Sensors oder ein Wegdrehen des Sensors im Crashfall.

Durch die erfindungsgemäße Vorrichtung kann der Sensor auch mit sehr dünn ausgeführten Trägerstrukturen verbunden werden, bei welchen es aus Sicherheitsgründen nicht möglich ist, den Sensor einfach mit Schrauben anzuschrauben, die direkt in die Trägerstruktur eingeschraubt werden.

Ein weiterer Vorteil der erfindungsgemäßen Hilfsstruktur besteht darin, dass der Sensoreinbauort an der Trägerstruktur des Fahrzeugs durch eine entsprechende mechanische Auslegung und/oder Ausführung der Form der Hilfsstruktur in weiten Grenzen nahezu frei wählbar ist und optimal an die Trägerstruktur angepasst werden kann.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Befestigung eines Sensors für ein Fußgängerschutzsystem möglich.

Besonders vorteilhaft ist, dass die Hilfsstruktur mittels Laserschweißen und/oder Ultraschallschweißen und/oder Kleben mit der Trägerstruktur verbindbar ist, wodurch eine sichere Befestigung und eine flexible Auswahl des Befestigungsorts für die Hilfsstruktur möglich ist. Zur Verstärkung der Hilfsstruktur können Einlegeteile, vorzugsweise Metalleinlegeteile, in die Hilfsstruktur eingespritzt und/oder eingenietet und/oder eingepresst werden. Durch die Einlegeteile ist es beispielsweise möglich, die Hilfsstruktur optimal an ein Sensorgehäuse anzupassen, so dass das Sensorgehäuse beispielsweise über eine Klebeverbindung fest mit der Hilfsstruktur verbunden werden kann. Zusätzlich oder alternativ können die Einlegeteile ein Gewinde aufweisen, welches ermöglicht, dass das Sensorgehäuse über eine Schraubverbindung fest mit der Hilfsstruktur verbindbar ist. Zudem kann ein Metallüberwurf über die Hilfsstruktur geschoben werden, welche auf einer Seite ein Loch und auf einer anderen Seite ein Gewinde aufweist, so dass der Sensor dauerhaft mit der Hilfsstruktur verschraubt werden kann. Zusätzlich kann durch eine geeignete Wahl und Stärke des Materials für die Hilfsstruktur der Sensor direkt mit der Hilfsstruktur verschraubt werden.

In weiterer Ausgestaltung der erfindungsgemäßen Vorrichtung zur Sensorbefestigung werden die Hilfsstruktur und/oder der Sensor mit der Hilfsstruktur als Einlegeteil ausgeführt und bei einem Spritzgussvorgang zur Herstellung der Trägerstruktur mit der Trägerstruktur verschmolzen. Dadurch wird in vorteilhafter Weise eine optimale Kopplung des Sensors mit der Trägerstruktur zur Erfassung der durch einen Aufprall verursachten Signale ermöglicht. Der Sensor kann beispielsweise auf einem als Hilfsstruktur wirkenden Stanzgitter direkt in die Trägerstruktur eingespritzt werden. Bei einer möglichen Ausführungsform wird ein Steckerkontakt zur elektrischen Kontaktierung des Sensors aus der Trägerstruktur herausgeführt, so dass eine Signalübertragung zu einer Auswerte- und Steuereinheit durchgeführt werden kann. Bei einer alternativen Ausführungsform umfasst der Sensor in vorteilhafter Weise eine Luftschnittstelle, über welche die erzeugten Sensorsignale drahtlos zur Auswerte- und Steuereinheit übertragen werden können. Dies ermöglicht eine vollständige Integration des Sensors und der Hilfsstruktur in die Trägerstruktur.

Mit der erfindungsgemäßen Vorrichtung zur Sensorbefestigung für ein Fußgängerschutzsystem können die verschiedenen Sensoren optimal im Fahrzeugfrontbereich angeordnet werden, so dass die Funktionalität des Fußgängerschutzsystems gewährleistet wird und die Sensoren derart steif oder versteift mit der Trägerstruktur verbunden sind, dass ein Wegdrehen der Sensoren im Crashfalle möglichst nicht erfolgen kann. Die Sensoren sind beispielsweise als Beschleunigungs-und/oder Drucksensoren ausgeführt und können die Beschleunigungs- bzw. Druckwerte in verschiedene Fahrzeugrichtungen erfassen, beispielsweise in die Fahrzeuglängsrichtung und/oder in die Fahrzeugquerrichtung und/oder in die Fahrzeughochrichtung.

### Zeichnung

Ausführungsbeispiele der Erfindung sind in der Zeichnung dargestellt und werden in der nachfolgende Beschreibung näher erläutert.

Es zeigen
- Figur 1: eine perspektivische Darstellung eines Ausführungsbeispiels einer Vorrichtung zur Befestigung eines Sensors, und
- Figur 2: eine Schnittdarstellung eines weiteren Ausführungsbeispiels einer Vorrichtung zur Befestigung eines Sensors.

### Beschreibung

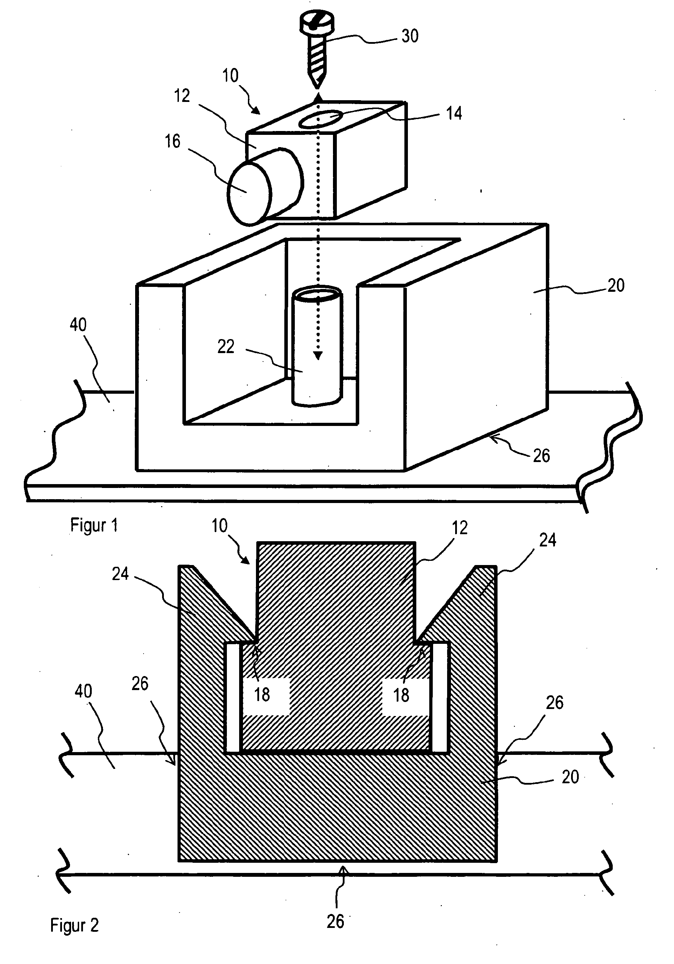

Wie aus Figur 1 ersichtlich ist, umfasst eine erfindungsgemäße Vorrichtung zur Befestigung eines Sensors 10 für ein Fußgängerschutzsystem an einer beispielsweise als Stossfänger ausgeführten Trägerstruktur 40, eine Hilfsstruktur 20, welche dauerhaft über eine Klebeverbindung an den entsprechenden Kontaktflächen 26 mit der Trägerstruktur 40 verbunden ist. Alternativ kann die Hilfsstruktur 20 mittels Laserschweißen und/oder Ultraschallschweißen mit der Trägerstruktur 40 verbunden werden. Wie weiter aus Figur 1 ersichtlich ist, ist die Trägerstruktur 20 an ein Gehäuse 12 des Sensors 10 angepasst. Das Sensorgehäuse 12 umfasst einen Durchbruch 14 über den das Sensorgehäuse 12 auf einen Stift 22 der Hilfsstruktur 20 aufsteckbar ist. Der Stift 22 weist ein Gewinde auf, in welches eine Schraube 30 zur Befestigung des Sensors 10 an der Hilfsstruktur 20 anschraubbar ist. Zusätzlich kann dass Sensorgehäuse 12 mit den an die Gehäuseform angepassten Kontaktflachen der Hilfsstruktur 20 verklebt werden. Der Sensor 10 umfasst einen Steckerkontakt 16, über welchen der Sensor 10 mit einer nicht dargestellten Auswerte- und Steuereinheit elektrisch verbunden werden kann.

Bei einer in Figur 2 dargestellten Ausführungsform der erfindungsgemäßen Vorrichtung zur Befestigung eines Sensors 10 für ein Fußgängerschutzsystem, bilden die Hilfsstruktur 20 und das Sensorgehäuse 12 eine Klipsverbindung. Zu diesem Zweck weist die Hilfsstruktur 20 zwei elastische Rastnasen 24 auf, welche in zugehörige Absätze 18 des Sensorgehäuses 12 eingreifen. Die dargestellte Hilfsstruktur 20 ist als Einlegeteil ausgeführt und wird bei der Herstellung der Trägerstruktur 40 durch einen Spritzgussvorgang an den Kontaktflächen 26 mit der Trägerstruktur 40 verschmolzen. Alternativ kann die Hilfsstruktur an die Trägerstruktur geschweißt und/oder geklebt werden.

Bei einer alternativen nicht dargestellten Ausführungsform der erfindungsgemäßen Vorrichtung wird der Sensor 10 beispielsweise auf einem als Hilfsstruktur 20 wirkenden Stanzgitter bei der Herstellung der Trägerstruktur 40 direkt in die Trägerstruktur 40 eingespritzt. Dadurch wird in vorteilhafter Weise eine optimale Kopplung des Sensors 10 mit der Trägerstruktur 40 zur Erfassung der durch einen Aufprall verursachten Signale ermöglicht. Der vollständig in die Trägerstruktur 40 integrierte Sensor 10 umfasst beispielsweise eine Luftschnittstelle, über welche die erzeugten Sensorsignale drahtlos zur Auswerte- und Steuereinheit übertragen werden können.

Mit der erfindungsgemäßen Vorrichtung zur Sensorbefestigung für ein Fußgängerschutzsystem können die verschiedenen Sensoren optimal im Fahrzeugfrontbereich angeordnet werden, so dass die Funktionalität des Fußgängerschutzsystems gewährleistet wird und die Sensoren derart steif oder versteift mit der Trägerstruktur verbunden sind, dass ein Wegdrehen der Sensoren im Crashfalle möglichst nicht erfolgen kann. Die Sensoren sind beispielsweise als Beschleunigungs-und/oder Drucksensoren ausgeführt und können die Beschleunigungs- bzw. Druckwerte in verschiedene Fahrzeugrichtungen erfassen, beispielsweise in die Fahrzeuglängsrichtung und/oder in die Fahrzeugquerrichtung und/oder in die Fahrzeughochrichtung.

## Patentansprüche

1. Vorrichtung zur Befestigung eines Sensors (10) für ein Fußgängerschutzsystem an einer Trägerstruktur (40) eines Fahrzeugs, wobei eine mit dem Sensor (10) verbindbare Hilfsstruktur (20) vorgesehen ist, welche dauerhaft mit der Trägerstruktur (40) des Fahrzeugs verbindbar ist und/oder an die Trägerstruktur (40) angeformt ist, wobei die Hilfsstruktur (20) an ein Sensorgehäuse (12) angepasst ist und fest mit dem Sensorgehäuse (12) verbindbar ist, über eine Schraubverbindung, **dadurch gekennzeichnet, dass** das Sensorgehäuse (12) einen Durchbruch (14) umfasst, über den das Sensorgehäuse (12) auf einen Stift (22) der Hilfsstruktur (20) aufsteckbar ist, dass der Stift (22) ein Gewinde aufweist, in welches eine Schraube (30) zur Befestigung des Sensors (10) an der Hilfsstruktur (20) anschraubbar ist.

2. Vorrichtung nach Anspruch 1, **dadurch gekennzeichnet, dass** die Trägerstruktur (40) als Stoßfängerverkleidung ausgeführt ist.

3. Vorrichtung nach Anspruch 1 oder 2, **dadurch gekennzeichnet, dass** die Hilfsstruktur (20) mittels Laserschweißen und/oder Ultraschallschweißen und/oder Kleben mit der Trägerstruktur (40) verbindbar ist.

4. Vorrichtung nach einem der Ansprüche 1 bis 3, **dadurch gekennzeichnet, dass** in die Hilfsstruktur (20) zur Verstärkung Einlegeteile, vorzugsweise Metalleinlegeteile, eingespritzt und/oder eingepresst sind.

5. Vorrichtung nach Anspruch 1 oder 2, **dadurch gekennzeichnet, dass** die Hilfsstruktur (20) als Einlegeteil ausgeführt ist und bei einem Spritzgussvorgang zur Herstellung der Trägerstruktur (40) mit der Trägerstruktur verschmolzen wird.

6. Vorrichtung nach Anspruch 1 oder 2, **dadurch gekennzeichnet, dass** der Sensor (10) mit der Hilfsstruktur (20) als Einlegeteil ausgeführt ist und beim Spritzgussvorgang zur Herstellung der Trägerstruktur (40) mit der Trägerstruktur (40) verschmolzen wird.

7. Vorrichtung nach Anspruch 6, **dadurch gekennzeichnet, dass** der Sensor (10) einen Steckerkontakt (16) umfasst, welcher zum Anschluss einer elektrischen Verbindung zugänglich bleibt.

8. Vorrichtung nach Anspruch 6, **dadurch gekennzeichnet, dass** der Sensor (10) eine Luftschnittstelle zum Übertragen der erzeugten Sensorsignale umfasst und vollständig in die Trägerstruktur (40) integrierbar ist.

## Claims

1. Apparatus for attaching a sensor (10) for a pedestrian protection system to a carrier structure (40) of a vehicle, wherein an auxiliary (20) which can be connected to the sensor (10) and which can be permanently connected to the carrier structure (40) of the vehicle and/or is integrally formed onto the carrier structure (40) is provided, wherein the auxiliary structure (20) is adapted to a sensor housing (12) and can be permanently connected to the sensor housing (12) via a screw connection, **characterized in that** the sensor housing (12) comprises a breakthrough (14) via which the sensor housing (12) can be plugged onto a gudgeon (22) of the auxiliary structure (20), **in that** the gudgeon (22) has a thread into which a screw (30) can be screwed in order to attach the sensor (10) to the auxiliary structure (20).

2. Apparatus according to Claim 1, **characterized in that** the carrier structure (40) is embodied as a bumper lining.

3. Apparatus according to Claim 1 or 2, **characterized in that** the auxiliary structure (20) can be connected to the carrier structure (40) by means of laser welding and/or ultrasonic welding and/or bonding.

4. Apparatus according to one of Claims 1 to 3, **characterized in that** insertion components, preferably metal insertion components, can be integrally injection moulded in the auxiliary structure (20) and/or pressed therein for the purpose of reinforcement.

5. Apparatus according to Claim 1 or 2, **characterized in that** the auxiliary structure (20) is embodied as an insertion part, and is fused to the carrier structure during an injection moulding process for manufacturing the carrier structure (40).

6. Apparatus according to Claim 1 or 2, **characterized in that** the sensor (10) with the auxiliary structure (20) is embodied as an insertion part and is fused to the carrier structure (40) during the injection moulding process for manufacturing the carrier structure (40) .

7. Apparatus according to Claim 6, **characterized in that** the sensor (10) comprises a plug-type contact (16) which remains accessible in order to connect an electrical connection.

8. Apparatus according to Claim 6, **characterized in that** the sensor (10) comprises an air interface for transmitting the generated sensor signals, and can be completely integrated into the carrier structure (40).

## Revendications

1. Dispositif de fixation d'une sonde (10) pour un système de protection des piétons sur la structure porteuse (40) d'un véhicule,
une structure auxiliaire (20) qui peut être reliée à la sonde (10) étant prévue et pouvant être reliée durablement à la structure porteuse (40) du véhicule et/ou étant formée sur la structure porteuse (40),
la structure auxiliaire (20) étant adaptée à un boîtier (12) de sonde et pouvant être reliée solidairement au boîtier (12) de sonde par une liaison vissée,
**caractérisé en ce que**
le boîtier (12) de sonde présente une perforation (14) par laquelle le boîtier (12) de sonde peut être enfiché sur un goujon (22) de la structure auxiliaire (20) et
**en ce que** le goujon (22) présente un filet dans lequel une vis (30) peut être vissée pour fixer la sonde (10) sur la structure auxiliaire (20).

2. Dispositif selon la revendication 1, **caractérisé en ce que** la structure porteuse (40) est configurée comme habillage de pare-chocs.

3. Dispositif selon les revendications 1 ou 2, **caractérisé en ce que** la structure auxiliaire (20) peut être reliée à la structure porteuse (40) par soudage au laser, soudage aux ultrasons et/ou collage.

4. Dispositif selon l'une des revendications 1 à 3, **caractérisé en ce que** des parties de garniture, de préférence des parties de garniture en métal, sont injectées et/ou comprimées dans la structure auxiliaire (20) pour la renforcer.

5. Dispositif selon les revendications 1 ou 2, **caractérisé en ce que** la structure auxiliaire (20) est configurée comme pièce de garniture et est fondue sur la structure porteuse dans une opération de moulage par injection destinée à fabriquer la structure porteuse (40).

6. Dispositif selon les revendications 1 ou 2, **caractérisé en ce que** la sonde (10) est configurée comme pièce de garniture avec la structure auxiliaire (20) et est fondue sur la structure porteuse (40) lors de l'opération de moulage par injection destinée à fabriquer la structure porteuse (40).

7. Dispositif selon la revendication 6, **caractérisé en ce que** la sonde (10) comporte un contact (16) enfichable qui reste accessible pour le raccordement d'une liaison électrique.

8. Dispositif selon la revendication 6, **caractérisé en ce que** la sonde (10) entoure un entrefer de transmission des signaux formés par la sonde et peut être intégrée complètement dans la structure porteuse (40).
